# EUROPEAN PATENT APPLICATION

(11) **EP 1 710 988 A2**
(43) Date of publication of application: **11.10.2006**
(21) Application number: 06112253.7
(22) Date of filing: 05.04.2006
(51) Int. Cl.: H04M 1/253, H04M 1/725

(54) **Telephone for PSTN and Internet**

(30) Priority: 06.04.2005 US 99690
(71) Applicant: RTX TELECOM A/S, 9400 Norresundby (DK)
(72) Inventor: Elbæk, Jørgen, 9430, Vadum (DK); Havmøller, Leo, 9000, Ålborg (DK)
(74) Representative: Plougmann & Vingtoft A/S

(57) **Abstract**

A dual telephone capable of performing and receiving calls via PSTN or via an IP based connection by using a single communication set. A user may select to call either via PSTN or IP from the communication set. In preferred embodiments the telephone has a base-station that is connected via an air-interface, e.g. DECT based, to a communication set. The base-station provides a PSTN interface and a USB interface for establishing IP based telephone connection via a USB port on an associated PC with Internet connection. The telephone may be provided with a program to run on the PC, this program providing an interface to a Softphone program provided by a softphone provider. According to a preferred USB protocol, auxiliary data messages, e.g. control messages, can be sent via the USB HID interface that allows exchange of e.g. Internet services such as emails to be retrieved by the communication set. Telephone audio data are exchanged via USB audio class data.

## Description

### Field of the invention

The invention relates to the field of telephony. More specifically, the invention provides a telephone adapted for Internet based telephony and the invention provides a protocol for communication between a telephone apparatus and an Internet-connected computer so as to provide Internet Protocol based telephone access via the computer. In addition, the invention provides an application programming interface for interfacing a soft-phone application program on the computer.

### Background of the invention

Voice over IP (VoIP) is used to deliver standard telephony services over an Internet based Protocol (IP) data network. Providers offer VoIP services that allow users to phone worldwide free of charge, and thus VoIP telephony provides a strong alternative to Public Switched Telephone Network (PSTN) services. However, existing IP telephone connections are either provided by a dedicated IP telephone connected to the Internet or by a so-called Soft Phone, i.e. dedicated software on a computer such as a Personal Computer (PC) that is connected to the Internet. When using a Soft Phone, the user has to be in the proximity of the PC in order to operate the Soft Phone, make and receive telephone calls and to be able to communicate via speaker and microphone connected to the PC. Furthermore, users normally need to supplement their IP telephone with a PSTN based telephone or a mobile phone since not all telephone users can be accessed via VoIP. Therefore, IP telephone solutions are often tedious to use in practice, and/or the necessary equipment is relatively expensive. Thus, in spite of attractive offers made by IP telephony providers, practical solutions are not suited to be widespread on the consumer market.

European patent application EP 1 385 320 A1 describes a telephone device that is capable of receiving calls from a PSTN line and from an IP based connection.

### Summary of the invention

It may be seen as an object of the present invention to provide a flexible telephone that provides a user friendly access to IP based telephone services. The telephone must be capable of receiving and performing calls on both PSTN and IP based nets. The telephone should be possible to implement with low cost components and thus allow the telephone to be affordable for consumers.

In a first aspect, the invention provides a telephone comprising
- first telephone means adapted to provide a telephone connection via an associated telephone network, and
- second telephone means adapted to provide a telephone connection via an associated Internet Protocol connection,
- a first communication set comprising
   - sound generating means,
   - sound receiving means, and
   - data exchange means adapted to exchange telephone communication data with one of the first and second telephone means.

By "telephone network" is understood a public network dedicated to telephone communication, i.e. a Public Switched Telephone Network (PSTN). The telephone network may be wire-based such as an analog wire-based line, or it may be wireless-based such as various mobile communication networks, e.g. GSM. The telephone network may also comprise simultaneously wireless sections and wired sections.

By the term "Internet Protocol (IP) connection" is understood any IP connection, e.g. Voice over Internet Protocol (VoIP), that allows exchange of data so as to perform a telephone communication. Thus, the term is to be construed as comprising any use of the Internet to exchange telephone communication data.

With a telephone according to the first aspect of the invention, an IP telephone with improved user comfort and user services is provided that makes it possible to choose between e.g. an ordinary PSTN telephone line and an IP based telephone line using only one communication set, and this communication set does not need to be close to an internet connected computer.

With data exchange means is understood means within the first communication set that allows transmission of telephone communication data, i.e. at least audio data, optionally also auxiliary data such as control data etc. to the first and second telephone means. Thus, preferably, the first and second telephone means comprise at least one common data exchange means allowing data exchange of at least audio data with the first communication set. Preferably, the data exchange means comprises wireless data exchange means, such as based on technology selected from the group consisting of: DECT, Bluetooth, ZigBee, HomeRF and WiFi. WiFi is defined and used here as a general term for all protocols under IEEE 802.11.

Embodiments comprising wireless data exchange means are especially suited to provide user friendly solutions since the first and second telephone means, or at least major parts thereof, may be positioned stationary, such as in a base station, while bi-directional audio data are wirelessly exchanged with the first communication set. Thus, the user can select between e.g. a PSTN telephone line and an IP based telephone line independent of the location of e.g. a stationary computer that provides a (wired) Internet connection, as long as the telephone it within reach of the base station.

The communication set may be a handset or a headset. However, the telephone may optionally comprise a plurality of communications sets, e.g. a mix of a plurality of handsets and headsets.

The first telephone means may be adapted to provide a telephone connection via a wired telephone network or via a mobile telephone network.

The telephone preferably comprises user-operable control means allowing a user to select between the first and second telephone means to be used to establish the telephone connection. Preferably, the user may select between a PSTN and an IP based telephone line by pushing one or more buttons placed on the telephone, or optionally this selection may be voice-activated or otherwise audio-activated. Preferably, the first communication set comprises user-operable control means allowing the user to perform a telephone call via the first or the second telephone means, i.e. via the PSTN or via the IP connection. At the same time, the user can receive telephone calls via the PSTN as well as via the IP connection using the first communication set.

Preferably the telephone comprises computer interface means for connection of the second telephone means to an associated computer with access to the associated Internet Protocol connection. By the term "computer" is to be construed a device comprising computing power necessary to provide access to the Internet and to be able to handle telecommunication data to and from the Internet.

Preferably, the computer interface means is adapted to exchange telephone communication data via a Universal Serial Bus (USB) port of an associated Personal Computer (PC). By the term "USB" is to be construed to comprise also USB2 as well as other variants of the USB. The USB connection may be implemented wired or wirelessly.

A telephone adapted to utilise a PC to provide access to an IP connection is attractive since PCs with Internet access are widespread, and thus the user only needs to plug the telephone to the PC and install suitable software in order to be able to access an IP connect. Hereby, the telephone can be implemented in a low cost version since the PC is utilised to provide services that require computer power, while the telephone in principle only needs to handle exchange of audio data communication with the PC together with a very limited amount of control data. E.g. a VoIP application is executed on the PC in order to communicate with the telephone, while the telephone can be implemented with low cost components without requiring extensive computing means.

The first communication set may be adapted to apply a first alarm signal upon receipt of a call by the first telephone means, and a second alarm signal upon receipt of a call by the second telephone means. Thus, using e.g. distinct alarm signals, such as distinct ring tones, the user can be informed about whether a call is a PSTN call or an IP call.

Preferably, the data exchange means and the computer interface means are adapted to exchange auxiliary data between the first communication set and the associated computer. Preferably, the first communication set comprises an information display adapted to display information received via the auxiliary data. The first communication set may comprise means adapted to generate and transmit a control signal to the associated computer via the auxiliary data. By auxiliary data is understood data that is deliberately added and that may or may not be related to data that is directly related to the audio recorded by the sound receiving or reproduced by the sound generating means. The auxiliary data may comprise other than audio data directly related to the telephone communication, such as control signals directly related to calling or receiving calls and thus data that are crucial for the telephone communication. The auxiliary data may also be used to provide additional functions provided by the associated computer. The information display may be adapted to display pre-defined information upon receipt of a message from the associated computer via the auxiliary data. For example the auxiliary data may comprise data from the computer that indicate whether a telephone user has received email on an email address. This may be indicated with a symbol on the display of the first communication set.

The first communication set may comprise user-operable control means adapted to generate and transmit a control signal to the associated computer in response to an input from a user. Such user input may be a request for a specific service from a software application being executed on the computer, e.g. such service may require that the computer renders data from the Internet.

The telephone may comprise a second communication set comprising sound generating means, sound receiving means, and data exchange means adapted to exchange telephone communication data with one of the first and second telephone means.

Preferably both communication sets comprise wireless data exchange means. The telephone may be adapted to simultaneously provide a first telephone connection between the first communication set and the first telephone means, and a second telephone connection between the second communication set and the second telephone means.

The telephone may further comprise a computer executable program code to be executed on the associated computer, in order for the associated computer to be able to exchange data with the computer interface means. The computer executable program code is preferably adapted to exchange data with a soft-phone application being executed on the associated computer.

The computer interface means is preferably adapted to exchange auxiliary data with the associated computer using USB HID class data. By auxiliary data is to be understood according to the above description. Preferably, the mentioned computer executable program code is adapted to receive USB HID class data.

In a second aspect, the invention provides a data protocol for transfer of auxiliary data between a telephone device and a computer, wherein the data protocol is based on a USB HID interface, the data protocol providing a data packet structure comprising
- a header field with a size of at least four bit, and
- an auxiliary data field with a size of at least seven bytes.

The protocol is suitable for interconnection of an IP telephone device and an associated host PC with a USB interface. With respect to the term "auxiliary data", see the above description. The auxiliary data field may for example be used to exchange control signals or control messages between the telephone device and the PC, e.g. control messages that are crucial for the telephone communication such as user authentication messages and messages regarding incoming and outgoing calls. The auxiliary data field may also be used to provide information regarding services that are not related to telephone communication, e.g. an email message may be sent from the PC to the first communication set etc. Audio data involved in a telephone communication are the preferably exchanged via USB audio class data.

Preferably, the header field comprises a packet identifier field and a sequence number field. The packet identifier field preferably occupies at least a first and a second bit of the header field. The packet identifier field may be used to indicate whether a data packet is a start data packet or not. A part of the auxiliary data field may be used as a message size field in a data packet indicated to be a start data packet by the packet identifier field.

Preferably, the protocol is adapted to fragment a data message into a plurality of fragments in case the data message has a size that exceeds a predefined auxiliary data field size.

In a preferred implementation the data protocol comprises
- a header field with a size of on byte of which a packet identifier field occupies four bits and a sequence number field occupies four bits,
- an auxiliary data field with a size of at least seven bytes.

The auxiliary data field preferably has a size of 15 bytes.

In a third aspect, the invention provides a computer program code comprising a data protocol according to the second aspect.

In a fourth aspect, the invention provides an application programming interface for providing information to an associated soft-phone application program, the interface comprising
- an access status parameter for indicating status regarding an on-going user validation,
- a user identification string for identifying a user,
- a user type parameter for indicating a type of user,
- a call reference parameter for uniquely identifying a call.

The application programming interface is suited to provide an interface between a telephone specific program and a soft-phone program provided by a software soft-phone provider. The application programming interface may further comprise a call direction parameter for identifying if a call is incoming or outgoing.

### Brief description of drawings

In the following the invention will be described in details with reference to the accompanying figures, of which
Fig. 1 shows a diagram of a telephone according to the invention,
Fig. 2 shows a diagram of a preferred embodiment of the telephone that provides access to the Internet via an associated PC,
Fig. 3 shows a diagram of exchange of auxiliary data, i.e. such as control messages etc., between a base station of the telephone device and a phone interface application program on the PC via the USB port of the PC,
Fig. 4 illustrates data packet structures of a preferred interface protocol for transfer of the auxiliary data of Fig. 3,
Fig. 5 illustrates a fragmentation of auxiliary data message that exceeds the size of the data packet of Fig. 4,
Fig. 6 illustrates events and methods involved between a phone interface application and a soft-phone application in case of an outgoing IP based peer-to-peer call,
Fig. 7 illustrates events and methods involved between a phone interface application and a soft-phone application in case of an ingoing IP based peer-to-peer call, and
Fig. 8 illustrates events and methods involved between a phone interface application and a soft-phone application in case of an outgoing PSTN call via the soft-phone application,

While the invention is susceptible to various modifications and alternative forms, specific embodiments have been shown by way of example in the drawings and will be described in detail herein. It should be understood, however, that the invention is not intended to be limited to the particular forms disclosed. Rather, the invention covers all modifications, equivalents, and alternatives falling within the spirit and scope of the invention as defined by the appended claims.

### Detailed description of the invention

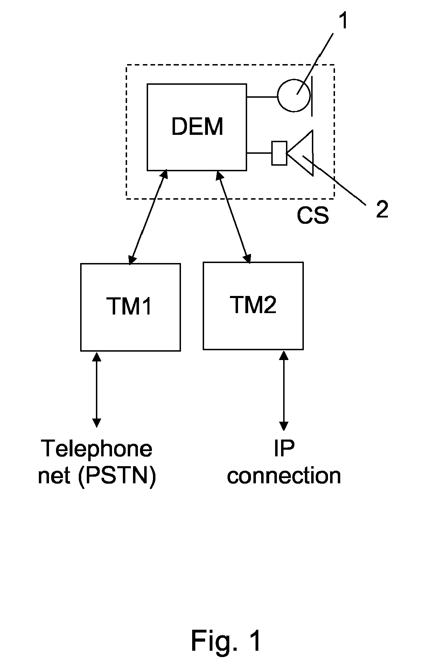

Fig. 1 shows a schematic diagram of an exemplary embodiment of the telephone according to the invention. The telephone comprises a first telephone means TM1 that provides access to a telephone line via a telephone network, e.g. PSTN or mobile telephone net. A second telephone means TM2 provides a telephone line via an Internet Protocol connection. A communication set CS according to an embodiment of the invention comprises a microphone 1 for receiving sound from a user, and a loudspeaker/receiver 2 for reproducing sound from a far end person. The communication set CS further comprises data exchange means DEM that allows an exchange of data allowing a telephone communication line to be established via either the first telephone means TM1 or via the second telephone means TM2. The telephone may comprise a third telephone means, such third telephone means providing access to a second PSTN telephone line or e.g. a GSM telephone line.

The communication set CS may be a handset comprising a display, a microphone, a receiver and user-operable control means, e.g. a push button key set. However, the communication set CS may also be a headset comprising a microphone and a receiver and may be partly or fully user controlled by voice. The user-operable control means preferably comprises means that allows a user to select between access via the PSTN telephone line, via TM1, or via the IP based connection, via TM2.

In preferred embodiments, the data exchange means DEM of the communication set CS comprises wireless transmission means that allows the communication CS set to communicate wirelessly with the first and second telephone means TM1, TM2, and thus even though the telephone means TM1, TM2 are wired by cable to a PSTN connector and a computer, respectively, a user can freely move around and access both types of telephone connections using only one communication set CS.

The data exchange means DEM is preferably adapted to exchange bi-directional audio data. The data exchange means DEM is preferably furthermore adapted to exchange control data from user-operable control means. For example such control data may comprise data from the communication set CS to request a telephone line connection or to request a connected telephone line connection to be disconnected. Control data may also comprise data to the communication set CS indicating that an incoming call is received and in addition it may comprise an indication of whether the call is received via the first or the second telephone means thus allowing the communication set to select e.g. a specific ring signal or a specific symbol on a display, allowing a user to distinguish between a PSTN call and an IP call.

Furthermore, more advanced control data may be exchanged, such as data not directly related to telephone voice data, e.g. an indication may be sent to the communication set CS in case an email has been received at a predefined email address, such as a communication set user.

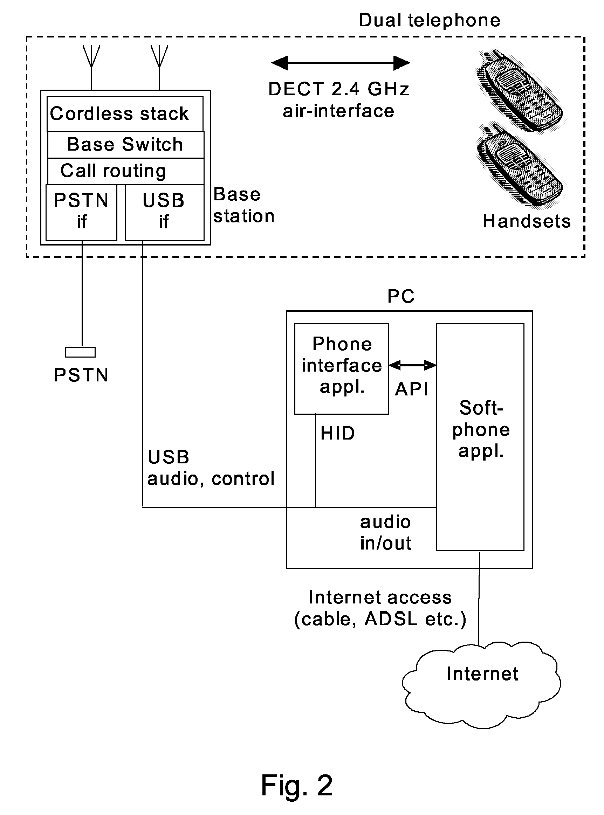

Fig. 2 shows a preferred telephone embodiment. In this embodiment the telephone comprises one or more handsets that are wirelessly connected to a base station. The base station comprises a standard PSTN interface, and an interface to a USB port of an associated PC, i.e. a host computer, in order to provide a telephone connection over the Internet via the PC connected to the Internet. The USB port is used to communicate the IP based telephone data and in addition to communicate auxiliary data, e.g. control messages etc. as previously described. The telephone also comprises a dedicated phone interface application software to be executed on the PC. This phone interface application software serves to handle communication with the base station and handle communication via an application programmable interface (API) with an associated Soft-phone application software also being executed on the PC. This Soft-phone application software typically being provided by a VoIP provider and serves to handle the bi-directional IP based telephone connection between the PC and the Internet.

The USB connection between the base station and the PC may be wired or it may be wireless, e.g. Bluetooth based. This USB connection transmits bi-directional audio and auxiliary data.

The PSTN interface and USB interface in the base station are connected by a call router that routes a call to/from either the PSTN connection or the USB interface at the PC. Via a base switch and a cordless stack, the base station provides wireless communication with one or more handsets, using e.g. a DECT-based interface; however other air-interfaces may alternatively be used. In a preferred implementation, one handset can simultaneously communicate via PSTN telephone line, while another handset communicates via a VoIP telephone line. Preferably, an "intercom" function is provided, i.e. two handsets may be used to communicate within reach of the base station without accessing either a PSTN telephone line or an IP based telephone line. A conference call may also be established between a plurality of handsets, which may be connected via a any of the group consisting of a PSTN network; a VoIP Soft Phone and an "intercom" function.

The user selects to perform a telephone call either via PSTN or the IP based connection by using a select button positioned on the handset. This generates a control signal that causes the call router to route the call to the desired one of the PSTN interface and the USB interface.

The air-interface connecting handset(s) and the base-station may be DECT as known in the art. Characteristics of an alternative air-interface are: 47 RF channels, minimum 15 channels dynamic frequency hopping, 8 double timeslots, 1.152 Mbit/s symbol rate, fast frequency hopping per slot, dual slot diversity: dynamically depending on interference level and traffic requirements, fast preamble antenna diversity, audio encoding: ADPCM 16 kHz sample rate, DECT standard cipher encryption, DECT standard authentication, 20 dBm transmit peak power, -92 dBm receiver sensitivity.

The handset preferably comprises a Liquid Crystal Display (LCD) and user-operable control means comprising buttons, for navigating on the LCD display, function buttons and other buttons, such as alphanumeric buttons. The handset display can display information related to the identity of the caller, phone book information or contact list information stored either in the base station or provided by the Soft Phone. The contact information shown in the handset display can also show online presence of contacts that use a telephone compatible with any of these functions. The handset buttons or voice interface and the LCD display can also be used to control and display information retrieved from the PC or from the Internet via the PC. This could be notification of received email. All handsets may share the same information through a shared information storage, such as a database.

The USB interface between telephone and PC may also be used for automatic setting of date/time information in the cordless base station and handset, as well as for automatic fetching of firmware (embedded product control software) via the PC, for instance from the Internet into the base station and into the handset without a user request. The firmware can be sent to the cordless handset using the radio interface without any user interaction.

In preferred embodiments, the base station comprises battery charging means and a housing formed so as to allow a handset comprising battery means to be placed thereon while not actively providing a telephone line.

On the host PC, the dedicated phone interface application software converts the control and audio signals between USB interface and the Soft Phone. The phone interface application program exchanges control data or control messages preferably using Human Interface Device (HID) class data via the USB interface, of which a preferred embodiment will be described in the following. Bi-directional audio data are preferably exchanged directly by the Soft Phone application on the PC using audio class input/output data via the USB interface. The phone interface application and the Soft Phone application exchange data via an Application Programmable Interface (API). The Soft Phone application handles the data exchange with the Internet Protocol connection. The Soft Phone application can be such as the one provided by Skype™, but it can alternatively be adapted to other Soft Phone applications that are adapted to communicate with the phone interface application. If an IP telephone call request is received from the dual telephone, a control signal is sent via the USB interface, and the phone application communicates this via the API to the Soft Phone application that initiates the call via the Internet connection on the PC. If an IP telephone call is received, the Soft Phone application informs the phone interface application that sends corresponding control data to the telephone via the USB interface.

Optionally, additional software may be implemented on the PC that allows additional functions to be accessed from the telephone via the USB connection, such as email related services, and displaying of images, e.g. moving pictures or photos to be sent from the PC to the telephone. This information may be retrieved from the Internet or other information storage that can be accessed by the PC. The PC software can be controlled from the handset via the base station and information from the PC application can be presented in the handset display. Such features may be a part of the phone interface application.

Audio signals provided by the Soft Phone are sent via the USB interface to the base station and then wirelessly communicated to at least one of the handsets. Audio signals from the handset(s) are sent via the base station through the USB interface to the Soft Phone application. Preferably, the base station and handset support various audio compression formats, including the standard PSTN network audio format. Many PSTN networks support only a 3.4 kHz audio bandwidth, whereas many VoIP services support audio format with higher bandwidths, such as for instance 7.0 kHz (commonly referred to as "wideband") audio compression formats. The DECT radio interface may support such formats by implementation of double slots. Audio data is transferred over the USB interface in a 16-bit linear PCB format and then converted into ADPCM format in the base station (64 kbit/s and 16 kHz sample rate). DECT double slots are used to transfer 64 kbit/s. The analogue signals on the PSTN interface are converted to digital signals by either a standard 8 kHz sample rate or a 16 kHz sample rate.

Instead of using a DECT radio interface, a wireless data exchange means may be provided using 900 MHz, 2.4 GHz or 5.8 GHz wireless technologies. Alternatively to a USB connection between base station and the PC, the connection could be a implemented using Ethernet, serial interface (RS232) or other interface. Alternatively, the USB interface could be implemented in a specialized handset (with or without keyboard and display) instead of on the base station. In another embodiment, other types of handsets, such as traditional PSTN-compatible handsets, can be connected to the base station that provides an interface between the other type of handset and the USB interface to establish a telephone connection via the Soft Phone on the PC.

The selection between PSTN network and VoIP service can also be performed automatically by software in the handset or base station.

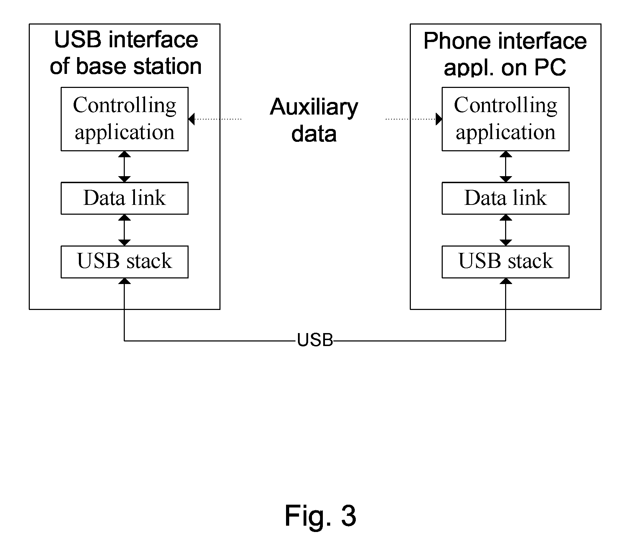

Fig. 3 shows a sketch of a preferred communication of auxiliary data, such as control messages, between the USB interface of the base station and the phone interface application on the host PC. The USB interface, uses the vendor defined usage page of the HID class data to communicate the auxiliary data. The auxiliary data are transferred using the HID interface split into data packets of a fixed size. The packet size is usually the same as the maximum data packet size for the USB endpoint used for the transfer. A data packet size of 16 bytes will be used as example to illustrate the principles of the preferred embodiment. A datalink protocol is used to perform segmentation and reassembly of the auxiliary data.

A preferred USB HID datalink protocol used to exchange auxiliary data will be further described in the following. Preferably, the datalink protocol provides the services listed in the Table below:

| Service | Description |
|---|---|
| Link status | The status of the datalink (connected or disconnected) is reported to the controlling applications. |
| Queuing | Messages to be sent are queued i.e. the controlling applications may send several messages without waiting for transfer completion. |
| Received size | When a message has been received, the datalink provides the message data and size to the controlling application. The inclusion of the size eliminates the need to have the message size included as a field in the message. |
| Full duplex protocol | Messages can be sent and received simultaneously. |

The USB HID interface provides packet-reliable communication to the datalink protocol, i.e. individual data packets may be lost in the transmission, but if a data packet is received, it is guaranteed to be correct.

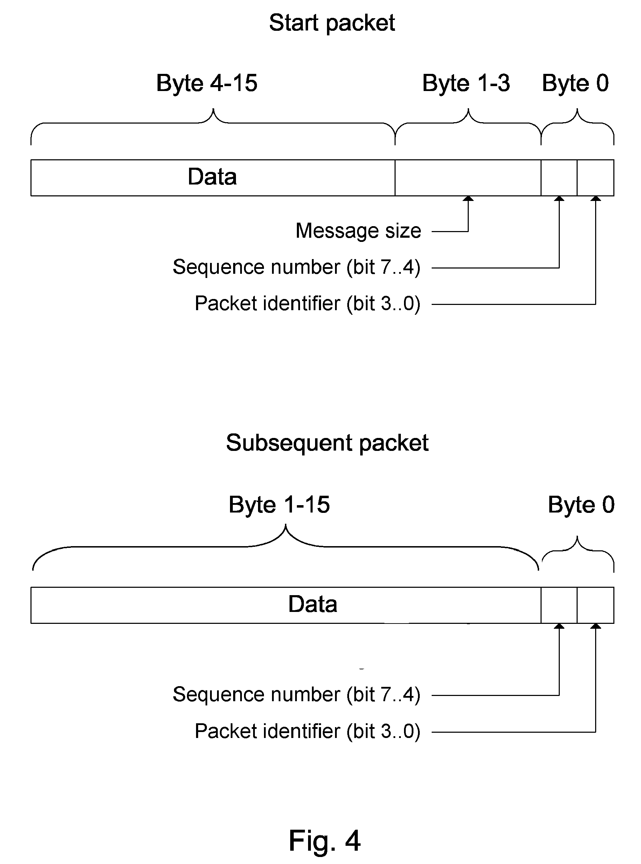

Fig. 4 illustrates a preferred layout of data packets for transmission of auxiliary data, i.e. messages. The preferred data packet comprises a prefixed 1 byte header field comprising a packet identifier (bit 0-3) and a sequence number (bit 4-7). The message size field is only used for start data packets. In subsequent data packets, the message size field is used for data. The Table below lists preferred packet identifier content:

| Packet Identifier | Description |
|---|---|
| Sync (0) | Begin datalink synchronization. |
| Sync Ack (1) | Datalink synchronization complete. |
| Start (2) | First packet for a message. The message size field is included in the packet. |
| Fragment (3) | Following packets for a message. |
| Ack (4) | Message received successfully. |
| Nak (5) | Message not received successfully (sender should retransmit). |

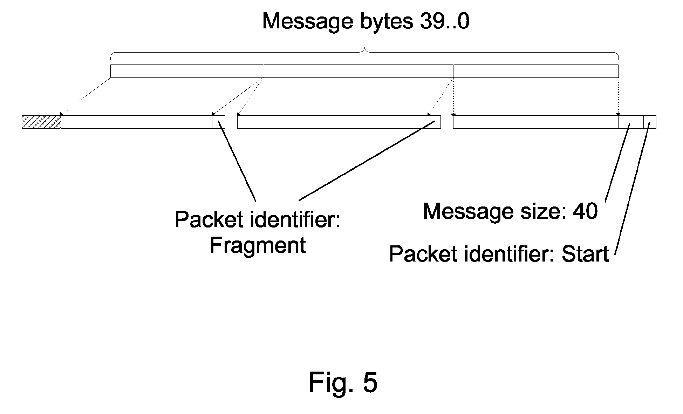

Fig. 5 illustrates an example on how a 40-byte message is fragmented into packets. Here it is illustrated that the message size filed is only used in the start packet to indicate the total size of the message, while the message size field is utilized for message data in the subsequent (fragment) packets.

The Table below indicates a preferred list of control message identifiers and a brief description thereof. Preferably, this message identifier is sent as the first byte of the message data. In the Table a message direction is indicated by "B" for base station or "H" for host computer. In the Table preferred codes for each message (hexadecimal) are indicated.

| Message identifier | Code | Direction | Description |
|---|---|---|---|
| VERSION_REQ | 0x40 | B > H | Host requests base control protocol version. |
| VERSION_CFM | 0x41 | B < H | Base control protocol version. |

| Message | Code | Direction | Description |
|---|---|---|---|
| APP_STATUS | 0x60 | B < H | Notification that the online status for the softphone application or local user has changed. |
| USER_STATUS | 0x61 | B < H | Notification that the online status for a contact has changed. |
| TIME_STATUS | 0x62 | B < H | Notification that the system time and/or time format has been updated. |
| SET_OWN_STATUS | 0x63 | B > H | Request to change the online status for the local user. |
| GET_STATUS_REQ | 0x64 | B > H | Request online status for a contact. |
| GET_STATUS_CFM | 0x65 | B < H | Contact online status information. |

| Message | Code | Direction | Description |
|---|---|---|---|
| GET_COUNTRY_REQ | 0x75 | B > H | Request the country setting from the host. |
| SET_COUNTRY_REQ | 0x76 | B > H | Change country. |
| COUNTRY_CFM | 0x77 | B < H | Host country setting. |

| Message | Code | Direction | Description |
|---|---|---|---|
| CC_SETUP | 0x50 | both | Begin call setup. This message may include partial or full origination/destination information. The origination may be a softphone user ID, or a PSTN number. |
| CC_SETUP_ACK | 0x51 | B < H | Call is being processed. |
| CC_INFO | 0x52 | B > H | Additional destination information (e.g. PSTN digits). |
| CC_PROCEEDING | 0x53 | both | Call is being routed. |
| CC_ALERTING | 0x54 | both | Destination is being alerted (phone is ringing). |
| CC_CONNECT | 0x55 | both | Begin connection of audio path. |
| CC_CONNECT_ACK | 0x56 | both | Connection complete (call is active). |
| CC_RELEASE | 0x57 | both | Begin call release. |
| CC_RELEASE_ACK | 0x58 | both | Call release completed. |

In the following details of a preferred API to provide access between the phone interface application and the Soft-phone application on the host PC will be described. The Tables below indicate preferred methods and events available in the API. In the Tables, the soft-phone application is referred to as "Softphone".
Access Control

| Type | Function | Description |
|---|---|---|
| method | AccessReq | PIA requests access to the Softphone. |
| event | AccessStatus | Progress and/or result. Also used to notify about Softphone shutdown. |

Audio Devices

| Type | Function | Description |
|---|---|---|
| method | GetMicrophoneDevice | Get Softphone's current microphone device setting. |
| method | SetMicrophoneDevice | Change microphone device. |
| event | MicrophoneDeviceChanged | Microphone device was changed. |
| method | GetSpeakerDevice | Get Softphone's current speaker device setting. |
| method | SetSpeakerDevice | Change speaker device. |
| event | SpeakerDeviceChanged | Speaker device was changed. |

Display Text

| Type | Function | Description |
|---|---|---|
| event | DisplayText | Display notification text on handset. |

Local User Information

| Type | Function | Description |
|---|---|---|
| method | GetMyUserId | Get user ID of current logged in user (if any). |
| method | SetMyUserId | Log in/out with user ID. |
| event | MyUserIdChanged | User logged in/out. |
| method | GetMyStatus | Get online status of local user. |
| method | SetMyStatus | Change online status of local user. |
| event | MyStatusChanged | Local user's status changed. |

Contact List Information

| Type | Function | Description |
|---|---|---|
| method | GetContacts | Get contact list. |
| method | GetUserType | Get type of user (e.g. Peer-to-Peer, PSTN) for a user ID. |
| method | GetUserName | Get name for a user ID. |
| method | GetUserStatus | Get online status for a user ID. |
| event | ContactAdded | A contact was added to the list. |
| event | ContactRemoved | A contact was removed from the list. |
| event | UserNameChanged | The name of a user was changed. |
| event | UserStatusChanged | The online status of a user changed. |

Call Control

| Type | Function | Description |
|---|---|---|
| both | CcSetup | Start call. |
| both | CcProgress | Call progress information, e.g routing, alerting. |
| method | CcDigits | Send (DTMF) digits. |
| both | CcConnect | Connect call. |
| both | CcConnectAck | Connection complete (call active). |
| method | CcHold | Hold/park call. |
| method | CcResume | Resume/reconnect call. |
| both | CcRelease | Begin disconnection. |
| both | CcReleaseAck | Disconnection complete. |

The call control methods and events are symmetric, with the exception of the Direction parameter in the CcSetup event, and the CcDigits, CcHold and CcResume methods.

CcSetup starts a new call. When issued from the Softphone, the Direction parameter specifies whether the call is incoming or outgoing (i.e. call started by user clicking in the Softphone's window). The opposite side will respond with CcProgress or CcRelease.

CcProgress notifies about the progress of the call. CcDigits is used to send (DTMF) digits, if the Softphone has a PSTN gateway with support for that. CcConnect and CcConnectAck are used to complete the call setup. The call is active with the audio path open when this sequence has been completed. CcRelease is used to initiate call disconnection. CcRelease can be sent at any time in a call. Must always be answered with CcReleaseAck.
Access Status may be following:

| Status | Description |
|---|---|
| ACS_NULL (0) | Not used. |
| ACS_PENDING (1) | The Softphone is validating the PIA, probably showing a dialog to the user. |
| ACS_DENIED (2) | Access was denied. |
| ACS_ACCEPTED (3) | Access was granted. The PIA can now use all methods in the ISoftphone interface. |
| ACS_SHUTDOWN (4) | The Softphone is shutting down. The PIA must release the ISoftphone instance. |

UserID is a string that uniquely identifies a user or contact. The UserId must be unique across user types.
User Type may be of the following types:

| Type | Description |
|---|---|
| UID_NONE (0) | No specific user type. Also means all user types in the GetContacts method. |
| UID_P2P (1) | Peer-to-Peer user. |
| UID_PSTN_NUMBER (2) | PSTN number. |
| UID_SPEED_DIAL (3) | Speed dial number. Usually 2 numeric digits. |

User Online Status may be one of: US_NULL = 0, US_UNKNOWN = 1, US_LOGGED_OUT = 2, US_OFFLINE = 3, US_INVISIBLE = 4, US_ONLINE = 5, US_AWAY = 6, US_BUSY = 7, US_BE_RIGHT_BACK = 8, US_ON_THE_PHONE = 9, US_OUT_TO_LUNCH = 10, US_NOT_AVAILABLE = 11, US_DO_NOT_DISTURB = 12, US_BLOCKED = 13, US_CALL_ME = 14, US_MAX = 15.

A call reference is carried in all call control methods and events. It uniquely identifies a call during its lifetime (multiple calls may be in progress simultaneously). Call Reference may be one of CcCaIIRefType: unsigned char Softphone; unsigned char Client; unsigned char ConferenceId; unsigned char_reserved_. CC_NULL_CALLREF = 255, and CC_NULL_CONFID = 255.

Each side (PIA and soft-phone application) allocates a new call reference when a call is started. Each side may choose whatever value it desires, as long as the new call reference does not collide with any call references already in use. A common method is to simply increment the previous value used. The value CC_NULL_CALLREF is reserved for the null call reference. A call reference can be considered unused after CcReleaseAck is sent or received.

When a call is started, the initiating side allocates a call reference and sends CcSetup with the local call reference and null for the remote call reference. The first returned method/event carries the complete call reference for both sides. The ConferenceId is used to identify call references that are linked together in a conference.

Call references are transferred as unsigned long type in order to keep the interfaces automation compatible.

Call Direction may be one of CcDirectionType: CCD_NONE = 0, CCD_OUTGOING = 1, CCD_INCOMING = 2, CCD_MAX = 3.

The call direction parameter is only used when CcSetup is sent from the Softphone to the PIA. CcSetup from the PIA to the Softphone is implicit CCD_OUTGOING.

Call Progress parameter is used to inform about the progress of a call. CcCallProgressType may be:

| Type | Description |
|---|---|
| CCP_NONE = 0 | |
| CCP_ROUTING (1) | Call is being routed to the destination. |
| CCP_ALERTING (2) | The destination is being alerting (phone is ringing). |
| CCP_CONNECTED (3) | Call is connected. |
| CCP_INBAND_INFO_AVAILABLE (4) | Used to inform that audible information is available i.e. the audio path should be opened. Commonly used for outgoing PSTN calls. |

Release Reason parameter provides information about why a call was released. CcReleaseReasonType may be:

| Type | Description |
|---|---|
| CRR_NORMAL (0) | Normal call release. |
| CRR_NO_RESOURC (1) | Not enough resources are available to perform the call. |
| CRR_NOT_READY (2) | Calls cannot be made at this time. Try again later. |
| CRR_NOT_CONNECTED (3) | No network connection. |
| CRR_UNKNOWN (4) | Call failed for an unknown reason. |
| CRR_DENIED (5) | Access denied. |
| CRR_OFFLINE (6) | Destination is offline. |
| CRR_REJECTED (7) | Call rejected by destination. |
| CRR_BUSY (8) | Destination is busy. |
| CRR_TIMEOUT (9) | Timeout during call setup. |

Preferably, the phone interface application (PIA) only provides access to the API if a base-station is actually plugged into an USB port on the host PC. The PIA releases the API instance if the phone is unplugged from the USB connector, or if it receives an AccessStatus(ACS_SHUTDOWN) event.

Access Control is provided by means of method HRESULT AccessReq([in] BSTR AppName, [in] BSTR PublisherName); and event HRESULT AccessStatus([in] enum AccessStatusType Status). The PIA must call AccessReq to unlock the rest of the API. The Softphone then preferably fires AccessStatus events to notify the PIA of the progress. Validation of the PIA requesting access is to be decided by the Softphone vendor. One option is to allow access from any client, and always fire AccessStatus(ACS_ACCEPTED). However, a preferred option is that the Softphone vendor notifies the user of access attempts using a dialog displayed on a display of the PC.

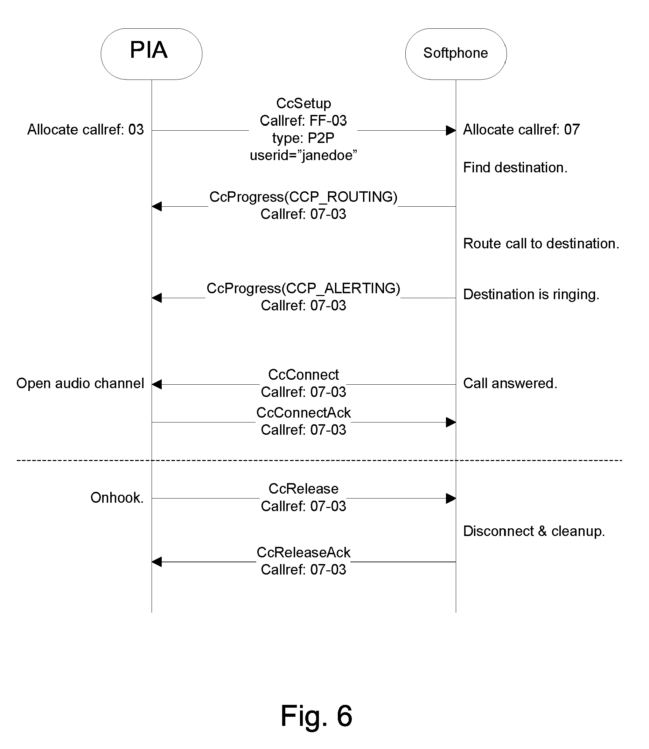

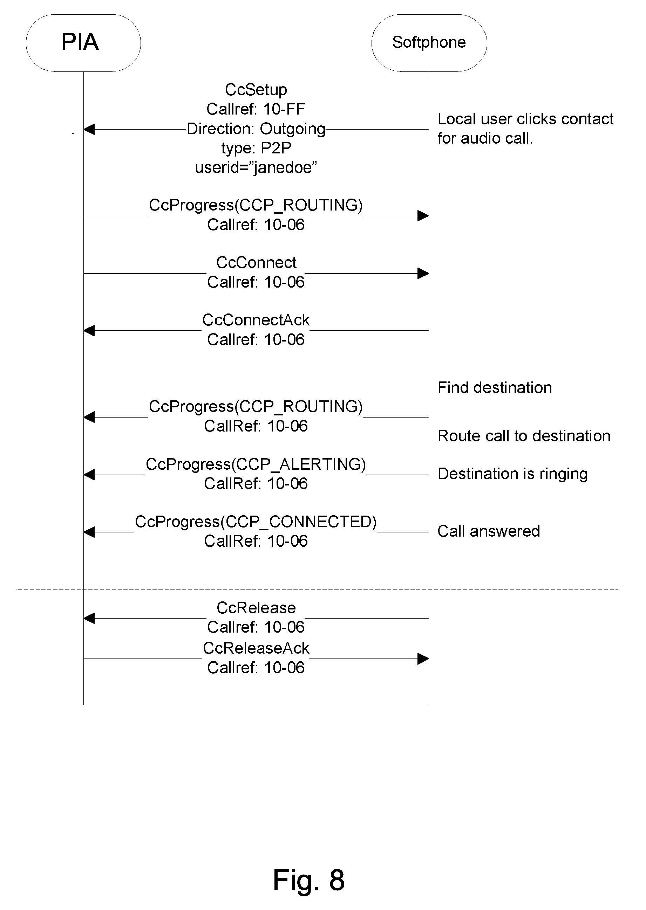

In Figs. 6-8 diagrams illustrate API methods and events involved in central procedures between the soft-phone application on the host PC, indicated by "Softphone", and the phone interface application, indicated by "PIA" on the host PC.

Fig. 6 illustrates an example of API methods and events involved in an outgoing IP based telephone call, i.e. a user call via the IP based connection using the Softphone that established a peer-to-peer via the Internet connection.

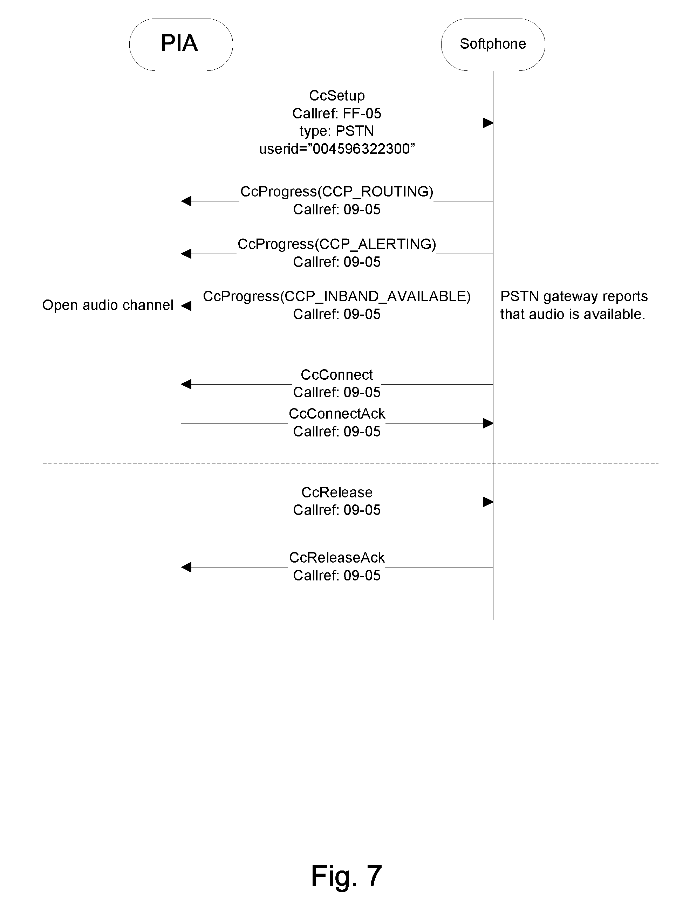

Fig. 7 illustrates an example of API methods and events involved in an outgoing PSTN call performed via the Softphone on the host PC, i.e. using a PSTN gateway. This type of PSTN call using the Internet allows the user to provide a telephone connection to a distant PSTN phone at a local charging rate.

## Claims

1. Telephone comprising
- first telephone means adapted to provide a telephone connection via an associated telephone network, and
- second telephone means adapted to provide a telephone connection via an associated Internet Protocol connection,
- a first communication set comprising
- sound generating means,
- sound receiving means, and
- data exchange means adapted to exchange telephone communication data with one of the first and second telephone means.

2. Telephone according to claim 1, wherein the data exchange means comprises wireless data exchange means.

3. Telephone according to claim 1 or 2, wherein the wireless data exchange means is based on a technology selected from the group consisting of: DECT, Bluetooth, ZigBee, HomeRF and WiFi.

4. Telephone according to any of the preceding claims, wherein the communication set is selected from the group consisting of: a handset, and a headset.

5. Telephone according to any of the preceding claims, wherein the first telephone means is adapted to provide a telephone connection via a telephone net selected from the group consisting of: wired telephone net, and mobile telephone net.

6. Telephone according to any of the preceding claims, further comprising user-operable control means allowing a user to select between the first and second telephone means to be used to establish the telephone connection.

7. Telephone according to any of the preceding claims, further comprising computer interface means for connection of the second telephone means to an associated computer with access to the associated Internet Protocol connection.

8. Telephone according to claim 7, wherein the computer interface means is adapted to exchange telephone communication data via a USB port of an associated Personal Computer.

9. Telephone according to any of the preceding claims, wherein the first communication set is adapted to apply a first alarm signal upon receipt of a call by the first telephone means, and a second alarm signal upon receipt of a call by the second telephone means.

10. Telephone according to claim 7, wherein the data exchange means and the computer interface means are adapted to exchange auxiliary data between the first communication set and the associated computer.

11. Telephone according to claim 10, wherein the first communication set comprises an information display adapted to display information received via the auxiliary data.

12. Telephone according to claim 10, wherein the first communication set comprises means adapted to generate and transmit a control signal to the associated computer via the auxiliary data.

13. Telephone according to claim 12, wherein the first communication set comprises user-operable control means adapted to generate and transmit a control signal to the associated computer in response to an input from a user.

14. Telephone according to claim 11, wherein the information display is adapted to display a pre-defined information upon receipt of a message from the associated computer via the auxiliary data.

15. Telephone according to any of the preceding claims, further comprising a second communication set comprising
- sound generating means,
- sound receiving means, and
- data exchange means adapted to exchange telephone communication data with one of the first and second telephone means.

16. Telephone according to claim 15, adapted to simultaneously provide
- a first telephone connection between the first communication set and the first telephone means, and
- a second telephone connection between the second communication set and the second telephone means.

17. Telephone according to claim 7, further comprising a computer executable program code to be executed on the associated computer, in order for the associated computer to be able to exchange data with the computer interface means.

18. Telephone according to claim 17, wherein the computer executable program code is adapted to exchange data with a soft-phone application being executed on the associated computer.

19. Telephone according to claim 10, wherein the computer interface means is adapted to exchange auxiliary data with the associated computer using USB HID class data.

20. Telephone according to claim 17, wherein the computer executable program code is adapted to receive USB HID class data.

21. Data protocol for transfer of auxiliary data between a telephone device and a computer, wherein the data protocol is based on a USB HID interface, the data protocol providing a data packet structure comprising
- a header field with a size of at least four bit, and
- an auxiliary data field with a size of at least seven bytes.

22. Data protocol according to claim 21, wherein the header field comprises a packet identifier field and a sequence number field.

23. Data protocol according to claim 22, wherein the packet identifier field occupies at least a first and a second bit of the header field.

24. Data protocol according to claim 22, wherein the packet identifier field is used to indicate whether a data packet is a start data packet or not.

25. Data protocol according to claim 24, wherein a part of the auxiliary data field is used as a message size field in a data packet indicated to be a start data packet by the packet identifier field.

26. Data protocol according to any of claims 21-25, comprising
- a header field with a size of on byte of which a packet identifier field occupies four bits and a sequence number field occupies four bits,
- an auxiliary data field with a size of at least seven bytes.

27. Data protocol according to claim 26, wherein the auxiliary data field has a size of 15 bytes.

28. Computer program code comprising a data protocol according to any of claims 21-27.

29. An application programming interface for providing information to an associated soft-phone application program, the interface comprising
- an access status parameter for indicating status regarding an on-going user validation,
- a user identification string for identifying a user,
- a user type parameter for indicating a type of user,
- a call reference parameter for uniquely identifying a call.
